(19) Europäisches Patentamt
European Patent Office
Office européen des brevets

(11) **EP 2 922 886 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(21) Anmeldenummer: **13791827.2**

(22) Anmeldetag: **18.11.2013**

(51) Int Cl.:
*C08G 18/10* (2006.01)     *C08G 18/66* (2006.01)
*C08G 18/76* (2006.01)     *C08G 101/00* (2006.01)

(86) Internationale Anmeldenummer:
**PCT/EP2013/074021**

(87) Internationale Veröffentlichungsnummer:
**WO 2014/079792 (30.05.2014 Gazette 2014/22)**

(54) **VERFAHREN ZUR HERSTELLUNG VON FLEXIBLEN POLYURETHAN-WEICHSCHAUMSTOFFEN MIT HOHEM KOMFORT UND NIEDRIGEN HYSTERESEVERLUSTEN**

PROCESS FOR THE PREPARATION OF FLEXIBLE POLYURETHANE FOAMS WITH GREAT CONVENIENCE AND LOW HYSTERESIS LOSSES

PROCÉDÉ DE FABRICATION DE MOUSSES SOUPLES EN POLYURÉTHANE FLEXIBLES AVEC UN GRAND CONFORT ET UNE FAIBLE PERTE PAR HYSTÉRÈSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2012 EP 12193979**

(43) Veröffentlichungstag der Anmeldung:
**30.09.2015 Patentblatt 2015/40**

(73) Patentinhaber: **Covestro Deutschland AG**
**51373 Leverkusen (DE)**

(72) Erfinder:
• **JACOBS, Gundolf**
**51503 Rösrath (DE)**
• **ARNTZ, Hans-Detlef**
**53797 Lohmar (DE)**
• **PIRKL, Hans-Georg**
**51377 Leverkusen (DE)**
• **SCHULZ, Angelika**
**51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 0 555 721     WO-A1-2011/038846**
**WO-A1-2012/069384     DE-A1- 10 211 975**
**US-A1- 2011 269 863**

**Beschreibung**

Die vorliegende Erfindung betrifft ein Verfahren zur Herstellung von flexiblen Polyurethan-(PUR)-Weichschaumstoffen mit hohem Komfort und niedrigen Hystereseverlusten hergestellt durch die Umsetzung von organischen Polyisocyanaten enthaltend Di- und Polyisocyanate der Diphenylmethan (MDI)-Reihe mit Polyoxyalkylenpolyethern.

Flexible PUR-Weichschaumstoffe werden hergestellt durch die Umsetzung von organischen Polyisocyanaten wie beispielsweise Toluylendiisocyanat (TDI) und/oder Diphenylmethandiisocyanaten (MDI) mit Polyoxyalkylenpolyethern. Letztere sind häufig beschrieben hinsichtlich der sich durch ihren Aufbau ergebenden Wirkung auf die physikalischen Eigenschaften der PUR-Weichschaumstoffe wie beispielsweise Offenzelligkeit und Elastizität der resultierenden Schäume.

So weist EP-A 0 547 765 flexible PUR-Schäume aus, die durch die Reaktion von Isocyanat-Blends mit Polyoxypropylen-polyoxyethylen-polyethern erhalten werden, bei denen die Isocyanatmischung mindestens 85 Gew.-% des 4,4'-MDI-Isomeren enthalten und die Polyetherpolyole einen Ethylenoxidgehalt von 60-85 Gew.-% aufweisen. Diese Schäume sind in hohem Maß offenzellig und neigen bei der Verarbeitung zum Schaumkollaps.

Nach WO-A 01/032735 wird ein hochelastischer PUR-Schaum erhalten als Reaktionsprodukt eines Isocyanatprepolymers mit einem 4,4'-MDI - Gehalt von mindestens 80 Gew.-% und einem freien NCO-Wert von unter 20 Gew.-% mit einem Polyethergemisch enthaltend mindestens zwei Polyetherpolole, von denen eines einen Ethylenoxid-Anteil von mehr als 50 Gew.-% und ein weiteres Polyetherpolyol einen Ethylenoxid-Anteil zwischen 20 und 50 Gew.-% aufweisen, dies in Form eines Mischblocks und/oder als EO-Endblock. Der Nachteil der so erhaltenen Schäume liegt in ihrer geringen Belastbarkeit speziell unter feuchten Bedingungen.

WO-A 2004/014976 offenbart ein Isocyanat-Prepolymer, eine Polyolzusammensetzung und ein Verfahren zur Herstellung eines weichelastischen PUR-Schaumstoffs, wobei das Prepolymer aus einem speziellen Ethylenoxid-reichen (21-45 Gew.-% Ethylenoxid, bezogen auf die Summe von Alkylenoxiden) Polyoxyethylen-polyoxypropylen-polyether und einem 4,4'-MDI reichen (≥80 Gew.-% 4,4'-MDI) Isocyanatgemisch hergestellt wird, das mit 30-100 Teilen eines weiteren Ethylenoxid-reichen (≥ 50 Gew.-% Ethylenoxid bezogen auf die Summe von Alkylenoxiden) Polyetherpolyols umgesetzt wird. Bereits bei geringem Unterschreiten des Overpackings von 30 % oder durch zu starke Entlüftung der Formen neigen solche Reaktionsmischungen zum Kollaps, was die sichere Prozessführung erschwert. Unter Overpacking wird der Anteil des Reaktionsgemischs verstanden, der mehr in eine Form gefüllt wird als notwendig ist, um ihr Volumen mit einem Freischaum auszufüllen.

In US-A 2003/0158280 wird ein Verfahren zur Herstellung eines flexiblen PUR-Schaums beschrieben, bei dem ein MDI Gemisch bestehend aus 11 bis 75 Gew.-% 4,4'-MDI und 18 bis 85 Gew.-% der 2,4' und 2,2'MDI Isomere und bis zu 25 Gew.-% höherer MDI Homologe sowie gegebenenfalls bis zu 20 Gew.-% TDI in Gegenwart von Wasser mit einem Gemisch aus einem Ethylenoxid-reichen und einem Ethylenoxid-armen Polyetherpolol umgesetzt wird.

WO-A 02/068493 offenbart ein Verfahren zur Herstellung von flexiblen Polyurethanschäumen durch den Umsatz von Prepolymeren mit NCO-Werten von zwischen 5 und 30 Gew.-%, die sich ableiten aus dem Reaktionsprodukt aus 80 bis 100 Gew.-% MDI mit einem Anteil von mindestens 40 Gew.-% des 4,4'-Isomers und 20 bis 0 Gew.-% eines anderen Polyisocyanates und einem Polyetherpolyol einer Funktionalität von 2 bis 8, einer OH-Zahl von 9 bis 225 mg KOH/g und einem Ethylenoxid-Gehalt von 50 bis 100 Gew.-% sowie einem weiteren Polyetherpolyol mit bis auf den Ethylenoxid-Gehalt von 0 bis 25 Gew.-% gleicher Charakterisierung und einer gegenüber Isocyanat reaktiven Komponente, die überwiegend aus einem Ethylenoxid-reichen Polyetherpolyol besteht. Neben dem verarbeitungstechnischen Nachteil, dass solche Ethylenoxid-reichen Schäume sehr offenzellig sind und zum Kollaps neigen, ist ihre Wasseraufnahme sehr hoch und ihre Alterungsbeständigkeit daher eher ungenügend. Ein Zusammenhang zwischen der Schaumqualität und einem bestimmten Isomerenverhältnis in der Isocyanat-Komponente wird nicht offenbart.

EP-A 1 213 310 offenbart Polyisocyanatzusammensetzungen und Verfahren zur Herstellung von PUR-Weichschawnstoffen. Die hier beschriebenen Polyisocyanat-Zusammensetzungen enthalten Ethylenoxid-reiche Polyetherpolyole mit einem Ethylenoxid-Anteil von mehr als 50 Gew.-%. Ein bevorzugt einzusetzendes Verhältnis der 4,4' und 2,4' MDI-Isomere wird nicht offenbart. In den Beispielen werden Isocyanat-Zusammensetzungen beschrieben, deren 4,4' und 2,4' MDI-Isomerenverhältnis bei 1,55 (erfindungsgemäßes Beispiel gemäß EP-A 1 213 310) und bei 3,2 (Vergleichsbeispiel gemäß EP-A 1 213 310) liegen.

EP-A 0 555 721 offenbart die Herstellung von hochelastischen Formschaumstoffen auf Basis von MDI, die durch Einsatz von hoch Ethylenoxid-haltigen Polyethern mit bestimmten ISocyanatmischungen zugänglich sind. Der Zusammenhang zwischen Schaumqualität und dem Verhältnis der 4,4' und 2,4' MDI-Isomere wird nicht offenbart.

WO-A 2012/069384 offenbart PUR-Weichschaumstoffe auf der Basis von nachwachsenden Rohstoffen mit 5-50 Gew.-% Polyrizinolsäureestern im Gemisch mit konventionellen Polyethern. Zusammenhang zwischen Schaumqualität und dem Verhältnis der 4,4' und 2,4' MDI-Isomere wird nicht offenbart.

DE-A 102 11 975 offenbart PUR-Weichschaumstoffe mit einer Rohdichte bis 60 kg/m$^3$, deren Polyolgemisch sich aus Ethylenoxid-reichen und Ethylenoxid-armen Polyetherpolyolen zusammensetzt und die eine Hysterese von weniger als 20 % aufweisen. Das hier offenbarten Verhältnis der 4,4' und 2,4' MDI-Isomere der Polyisocyanatkomponente liegt im Bereich von 0,5 - 3. Der Einfluss des Isomerenverhältnisses auf die Schaumqualität wird nicht offenbart.

US-A 2011/0269863 offenbart PUR-Weichschaumstoffe basierend auf Fettsäureestern mit einer Rohdichte bis 50 kg/m$^3$, die eine Hysterese im Bereich von 15-17 % aufweisen. Ein Zusammenhang zwischen Schaumqualität und dem Verhältnis der 4,4' und 2,4' MDI-Isomere wird nicht offenbart.

Zur Herstellung von Sitzanwendungen im Automobilbereich werden PUR-Weichschaumstoffe auf der Basis von Diphenylmethandiisocyanaten mit Rohdichten von größer 50 kg/m$^3$ bevorzugt größer 63 kg/m$^3$ eingesetzt. Die obere Grenze der Rohdichte, anders als die untere Grenze, wird in der Literatur nicht spezifiziert. Rohdichten von größer 85 kg/m$^3$ sind ungewöhnlich, da die höheren Rohdichten ökonomisch nachteilig sind und bei gleicher Rezeptur eine höhere Härte mitbringen, da die Härte der Schaumstoffe direkt mit der Rohdichte korreliert. Für den Sitzspiegel, das Schaumstoffteil das die höchsten Komfortansprüche erfüllen muss, ist eine Einstellung der Zielhärte von 5,0 bis 9,0 kPa, erforderlich.

Für eine gegebene Rezeptur-Wassermenge erfolgt die Feineinstellung der Härte über die Anpassung der Formteildichte und/oder die Kennzahl (Isocyanat Index), die üblicherweise in einem Bereich von 75 bis 110, bevorzugt in einem Bereich von 80 bis 105 variiert wird. Die Kennzahl (Isocyanat Index) gibt das Verhältnis der tatsächlich eingesetzten IsocyanatMenge zur stöchiometrischen, d.h. berechneten Isocyanat- (NCO)-Menge an:

$$\text{Kennzahl} = [(\text{Isocyanat-Menge eingesetzt}) : (\text{Isocyanat-Menge berechnet})] \bullet 100 \qquad (I)$$

Keines der genannten Dokumente offenbart einen Zusammenhang des Verhältnisses der 4,4'-MDI- zu 2,4'-MDI-Isomeren auf die Eigenschaften der PUR-Weichschaumstoffe, insbesondere nicht auf eine Reduzierung des Hystereseverlusts.

Die Aufgabe bestand darin, ein Verfahren zur Herstellung von hochelastischen PUR-Weichschaumstoffen bereitzustellen, die eine gute Feuchtebeständigkeit sowie besonders niedrige Hystereseverluste ($\leq$ 16% bei einer Mindestrohdichte von 63 kg/m$^3$) aufweisen, da niedrige Hysteresewerte als Maß für gute elastische Schaumeigenschaften für den Sitzkomfort bedeutend sind. Die Hysterese (CLD) wird bestimmt in Anlehnung an DIN EN ISO 2439-1-2009.

Überraschenderweise wurde gefunden, dass hochelastische flexible PUR-Weichschaumstoffe mit einem Anteil an Ethylenoxid (EO) von $\leq$ 30 Gew.-% bevorzugt $\leq$ 20 Gew.-%, bezogen auf die Summe aller Alkylenoxid- Anteile in den zur Herstellung des PUR-Weichschaumstoffs eingesetzten Polyetherpolyolen, mit guten mechanischen Eigenschaften und Hystereseverlusten $\leq$ 16 % hergestellt werden können, wenn das Verhältnis von 4,4'-MDI zu 2,4'-MDI im eingesetzten Polyisocyanatgemisch zwischen 1,6 und 2,7 liegt.

Gegenstand der Erfindung ist daher ein Verfahren zur Herstellung von PUR-Weichschaumstoffen mit einer Rohdichte gemäß DIN EN ISO 3386-1-98 im Bereich von > 63 kg/m$^3$ bis $\leq$ 83 kg/m$^3$ und einem Hystereseverlust gemäß DIN EN ISO 2439-1-2009 von $\leq$ 16 durch Umsetzung von Komponente A enthaltend

A1 mindestens ein Polyetherpolyol mit einer Funktionalität von 2 bis 6, vorzugsweise 2 bis 4, einer Hydroxyl-Zahl (OH-Zahl) gemäß DIN 53240 von 9 bis 112 mg KOH/g, einem Anteil an Ethylenoxid von 5 bis 40 Gew.-%, bevorzugt von 5 bis 30 Gew.-%, besonders bevorzugt 10 bis 20 Gew.-% (bezogen auf die Summe der verwendeten Alkylenoxide),

A2 Wasser und/oder physikalischen Treibmitteln,

A3 gegebenenfalls gegenüber Isocyanaten reaktionsfähige Wasserstoffatome aufweisende Verbindungen mit einer OH-Zahl von 140 mg KOH/g bis 1800 mg KOH/g,

A4 Hilfs- und Zusatzstoffen wie

    a) Katalysatoren,
    b) oberflächenaktive Zusatzstoffe, und
    c) Pigmente oder Flammschutzmittel,

wobei Komponente A frei von Polyricinolsäureester ist, und mit

Komponente B, enthaltend,
ein Gemisch an Di- und Polyisocyanaten der Diphenylmethan (MDI)-Reihe (B1) und gegebenenfalls ein oder mehrere Polyetherpolyole (B2) mit einer Funktionalität von 2 bis 8, vorzugsweise von 2 bis 6, einer OH-Zah1 gemäß DIN 53240 von $\geq$ 9 mg KOH/g bis $\leq$ 56 mg KOH/g, bevorzugt von $\geq$ 25 mg KOH/g bis $\leq$ 45 mg KOH/g, wobei das Verhältnis von 4,4'-MDI zu 2,4'-MDI zwischen 1,6 und 2,7 liegt und der Gesamt-Monomeren-Gehalt bezogen auf die Summe der eingesetzten Isocyanate 75 bis 85 Gew.-% beträgt,

wobei die Herstellung des PUR-Weichschaumes, bevorzugt PUR-Weichfonnschaumes, bei einer Kennzahl von 75 bis 110, vorzugsweise 80 bis 105 erfolgt.

Weiterer Gegenstand der Erfindung sind die nach dem erfindungsgemäß Verfahren hergestellten PUR-Weichschaumstoffe, bevorzugt PUR-Weichformschaumstoffe, sowie deren Verwendung zur Herstellung von Formteilen und die Formteile selbst.

In einer Ausführungsform der Erfindung ist der PUR-Weichschaum, vorzugsweise PUR-Weichformschaum, erhältlich durch Reaktion von 100 Gew.-Teilen A1, 0,5 bis 5 Gew.-Teilen, bevorzugt 1,0 bis 4,0 Gew.-Teilen, besonders bevorzugt 2,0 bis 3,2 Gew.-Teilen (bezogen auf 100 Gew.-Teile der Komponente A1) A2, 0 bis 10 Gew.-Teilen, bevorzugt 0,05 bis 5 Gew.-Teilen (bezogen auf 100 Gew.-Teile der Komponente A1) A3 und 0,05 bis 10 Gew.-Teilen, bevorzugt 0,2 bis 4 Gew.-Teilen (bezogen auf 100 Gew.-Teile der Komponente A1) A4 mit Komponente B.

Komponente A

Komponente A ist frei von Polyricinolsäureestern.

Komponente A1

Ausgangskomponenten gemäß Komponente A1 sind Polyetherpolyole. Als Polyetherpolyole im Sinne der Erfindung werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von $\geq 9$ mg KOH/g bis $\leq$ 112 mg KOH/g, vorzugsweise von $\geq 15$ mg KOH/g bis $\leq 80$ mg KOH/g, besonders bevorzugt von > 20 mg KOH/g bis $\leq$ 60 mg KOH/g sind. Die erfindungsgemäßen Polyetherpolyole A1 weisen einen Anteil an Ethylenoxid von 5 bis 40 Gew.-%, bevorzugt von 5 bis 30 Gew.-%, besonders bevorzugt 10 bis 20 Gew.-% bezogen auf die Summe der verwendeten Alkylenoxide, auf.

Die Funktionalität der Polyetherpolyole wird durch die Funktionalität der zu der Herstellung der Polyetherpolyole eingesetzten Starterverbindungen bestimmt.

Die für die Herstellung der Polyetherpolyole eingesetzten Starterverbindungen mit zerewitinoff-aktiven Wasserstoffatomen weisen meist Funktionalitäten von 2 bis 6 auf, vorzugsweise von 2 bis 4, und sind vorzugsweise hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5 -pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindmg Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxyd. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

In einer weiteren Ausführungsform können als Komponente A1 auch Polyethercarbonatpolyole eingesetzt werden, wie sie beispielsweise durch katalytische Umsetzung von Alkylenoxiden (Epoxiden) und Kohlendioxid in Anwesenheit von H-funktionellen Startersubstanzen erhältlich sind (siehe z.B. EP-A 2046861). Diese Polyethercarbonatpolyole haben im Allgemeinen eine Hydroxyl-Funktionalität von 2 bis 8, bevorzugt von 2 bis 6 und besonders bevorzugt von 2 bis 4. Die OH-Zahl beträgt bevorzugt von $\geq 9$ mg KOH/g bis $\leq$ 112mg KOH/g, besonders bevorzugt von $\geq 10$ mg KOH/g bis $\leq 112$ mg KOH/g.

Komponente A1 kann auch Polymerpolyole enthalten, ein PHD-Polyol oder ein PIPA-Polyol. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Ges.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole. PIPA-Polyole sind in GB 2 072 204 A, DE 31 03 757 A1 und US 4 374 209 A eingehend beschrieben.

Es können auch Mischungen von Komponente A1 enthalten sein.

In einer Ausführungsform des erfindungsgemäßen Verfahrens enthält Komponente A1

A1.1 mindestens ein Polyetherpolyol mit einer Funktionalität von 2 bis 6, bevorzugt von 3 bis 4, einem EO-Gehalt von 5 bis 40 Gew.-%, bevorzugt von 5 bis 30 Gew.-%, besonders bevorzugt 10 bis 20 Gew.-% einer OH-Zahl gemäß DIN 53240 von ≥9 mg KOH/g bis ≤ 112 mg KOH/g, bevorzugt von ≥ 20 mg KOH/g bis ≤ 40 mg KOH/g,

A1.2 gegebenenfalls mindestens ein Polyetherpolyol mit einer Funktionalität von 2 bis 6, bevorzugt von 3, einem EO-Gehalt von > 60 Gew.-%, bevorzugt > 70 Gew.-%, einer OH-Zahl gemäß DIN 53240 von ≥9 mg KOH/g bis ≤ 112 mg KOH/g, bevorzugt von ≥20 mg KOH/g bis ≤ 50 mg KOH/g,

A1.3 gegebenenfalls mindestens eine Dispersion eines Polymers in einem Polyetherpolyol, wobei die OH-Zahl gemäß DIN 53240 der Dispersion in einem Bereich von 9 bis 60 mg KOH/g liegt und wobei das Polyetherpolyol eine Hydroxyl-Funktionalität 2 bis 6, vorzugsweise von 2 bis 4, besonders bevorzugt von 3, einen PO-Gehalt in einer Menge von 70 bis 90 Gew.-% und einen EO-Gehalt in einer Menge von 10 bis 30 Gew.-% aufweist.

In dieser Ausführungsform können die Massenanteile der Komponenten A1.1 bis A1.3 (gegebenenfalls unabhängig voneinander) in den folgenden Bereichen liegen: A1.1 von 10 bis 100 Gew.-Teile; A1.2 von 0 bis 10 Gew.-Teile; A1.3 von 0 bis 90 Gew.- Teile, wobei sich die Gewichts-Teile A1.1 bis A1.3 zu 100 addieren.

In einer weiteren Ausführungsform können die Massenanteile der Komponenten A1.1 bis A1.3 (gegebenenfalls unabhängig voneinander) in den folgenden Bereichen liegen: A1.1 von 10 bis 100 Gew.-Teile; A1.2 von 1 bis 9 Gew.-Teile; A1.3 von 0 bis 89 Gew.- Teile, wobei sich die Gewichts-Teile A1.1 bis A1.3 zu 100 addieren.

Komponente A2

Als Komponente A2 werden Wasser und/oder physikalische Treibmittel eingesetzt. Als physikalische Treibmittel werden beispielsweise Kohlendioxid und/oder leicht flüchtige organische Substanzen wie z.B. Dichlormethan als Treibmittel eingesetzt. Vorzugsweise wird Wasser in einer Menge von 0,5 bis 5,0 Gew.-Teilen, bevorzugt von 1,0 bis 4,0 Gew.-Teilen, besonders bevorzugt von 2,0 bis 3,2 Gew.-Teilen (bezogen auf 100 Gew.-Teile A1) als Treibmittel eingesetzt.

Komponente A3

Gegebenenfalls werden als Komponente A3 Verbindungen mit mindestens zwei gegenüber Isocyanaten reaktionsfähigen Wasserstoffatomen und einer OH-Zahl von 140 mg KOH/g bis 1800 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A3 Ethanolamin, Diethanolamin, Triethanolamin, Sorbit und/oder Glycerin eingesetzt werden. Weitere Beispiele für Verbindungen gemäß Komponente A3 werden in EP-A 0 007 502, Seiten 16-17, beschrieben.

Komponente A4

Als Komponente A4 werden Hilfs- und Zusatzstoffe verwender wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat oder Ammoniumpolyphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt: aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt:

α) Harnstoff, Derivate des Harnstoffs und/oder

β) Amine und Aminoether, welche jeweils eine funktionelle Gruppe enthalten, die mit dem Isocyanat chemisch reagiert. Vorzugsweise ist die funktionelle Gruppe eine HydroxylGruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente B

Polyisocyanate enthaltend ein Gemisch an Di- und Polyisocyanaten der Diphenylmethan (MDI)-Reihe (B1) und gegebenenfalls ein oder mehrere Polyetherpolyole (B2) mit einer Funktionalität von 2 bis 8, vorzugsweise von 2 bis 6, einer OH-Zahl gemäß DIN 53240 von $\geq$ 9 mg KOH/g bis $\leq$ 56 mg KOH/g, bevorzugt von $\geq$ 25 mg KOH/g bis $\leq$ 45 mg KOH/g, wobei das Verhältnis von 4,4'-MDI zu 2,4'-MDI zwischen 1,6 und 2,7 liegt und der Gesamt-Monomeren-Gehalt bezogen auf die Summe der eingesetzten Isocyanate 75 bis 85 Gew.-% beträgt.

Komponente B kann entweder als sogenannter Isocyanat-Blend oder als Isocyanat-terminiertes urethangruppenhaltiges Prepolymer eingesetzt werden.

Für den Fall, dass Komponente B als Isocyanat-Blend vorliegt, wird eine Mischung genutzt enthaltend Di- und Polyisocyanate der Diphenylmethan (MDI)-Reihe (B1), wobei diese Mischung ein Verhältnis der 4,4'-MDI- zu 2,4'MDI-Isomeren zwischen 1,6 und 2,7 aufweist, und der Gesamt-Monomeren-Gehalt bezogen auf die Summe der eingesetzten Isocyanate im Bereich von 75 bis 85 Gew.-% liegt.

Für den Fall, dass Komponente B als Isocyanat-terminiertes urethangruppenhaltiges Prepolymer eingesetzt wird, ist das Isocyanat-terminierte urethangruppenhaltige Prepolymer erhältlich durch Umsetzung von einem Gemisch enthaltend Di- und Polyisocyanate der Diphenylmethan (MDI)-Reihe (B1), wobei diese Mischung ein Verhältnis der 4,4'-MDI- zu 2,4'-MDI-Isomeren zwischen 1,6 und 2,7 aufweist und der Gesamt-Monomeren-Gehalt bezogen auf die Summe der eingesetzten Isocyanate im Bereich von 75 bis 85 Gew.-% liegt, mit einem oder mehreren Polyetherpolyolen (B2) mit einer Funktionalität von 2 bis 8, vorzugsweise von 2 bis 6, einer OH-Zahl gemäß DIN 53240 von $\geq$ 9 mg KOH/g bis $\leq$ 56 mg KOH/g, bevorzugt von $\geq$ 25 mg KOH/g bis $\leq$ 45 mg KOH/g. Das urethangruppenhaltige Prepolymer weist vorzugsweise einen NCO-Gehalt von 15 bis 35 Gew.-%, bevorzugt von 22 bis 32,5 Gew.-% auf.

Bevorzugt werden dabei Komponente B1 und B2 zur Reaktion gebracht nach den dem Fachmann an sich bekannten Methoden. Beispielsweise können die Komponenten B1 und B2 bei einer Temperatur von 20 bis 80 °C vermischt werden, wobei sich das urethangruppenhaltige Prepolymer bildet. Im allgemeinen ist die Reaktion der Komponente B1 und B2 nach 30 min bis 24 h abgeschlossen unter Bildung des NCO-terminierten urethangruppenhaltigen Prepolymers. Gegebenenfalls können dem Fachmann bekannte Aktivatoren zur Herstellung des NCO-terminierten urethangruppenhaltigen Prepolymers eingesetzt werden.

Das urethangruppenhaltige Prepolymer gemäß Komponente B kann auch hergestellt werden, indem zunächst durch Umsetzung von einer ersten Teilmenge an einem Gemisch enthaltend Di- und Polyisocyanate der Diphenylmethan (MDI)-Reihe (B1) mit einem oder mehreren Polyetherpolyole (B2) mit einer Funktionalität von 2 bis 8, vorzugsweise von 2 bis 6, einer OH-Zahl gemäß DIN 53240 von $\geq$ 9 mg KOH/g bis $\leq$ 56 mg KOH/g, bevorzugt von $\geq$ 25 mg KOH/g bis $\leq$ 45 mg KOH/g ein urethangruppenhaltiges Prepolymer erhalten wird, das dann in einem weiteren Schritt mit einer zweiten Teilmenge an einem Gemisch enthaltend Di- und Polyisocyanaten der Diphenylmethan (MDI)-Reihe (B1) vermischt wird unter Erhalt des urethangruppenhaltigen Prepolymers gemäß Komponente B mit einem NCO-Crehalt von 15 bis 35 Gew.-%, bevorzugt von 22 bis 32,5 Gew.-%.

Neben den Di- und Polyisocyanaten der Diphenylmethan (MDI)-Reihe (B1) können auch weitere Polyisocyanate in Komponente B enthalten sein, wobei der Gesamtmonomerengehalt der eingesetzten Isocyanate im Bereich von 75 bis 85 Gew.-% liegt.

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (I)

$$Q(NCO)_n, \qquad (I)$$

in der
n = 2 - 4, vorzugsweise 2 -3,
und

Q    einen aliphatischen Kohlenwasserstoffrest mit 2-18, vorzugsweise 6-10 C-Atomen, einen cycloaliphatischen Kohlenwasserstoffrest mit 4-15, vorzugsweise 6 - 13 C-Atomen oder einen araliphatischen Kohlenwasserstoffrest mit 8-15, vorzugsweise 8 - 13 C-Atomen bedeuten.

Beispielsweise handelt es sich um solche Polyisocyanate, wie sie in der EP-A 0 007 502, Seiten 7-8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4-und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat, 2,4'-Diphenylmethandiisocyanat, 2,2'-Diphenylmethandiisocyanat und Polyphenylpolymethylenpolyisocyanat eingesetzt.

In einer bevorzugten Ausführungsform des erfindungsgemäßen Verfahrens ist Komponente B ausgewählt aus der Gruppe bestehend aus Di- und Polyisocyanaten aus der MDI-Reihe (B1) und gegebenenfalls ein oder mehrere Polyetherpolyole (B2).

Die Komponenten zur Herstellung des PUR-Weichschaumstoffs des erfindungsgemäßen Verfahrens werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben. Die Mischung der Komponenten initiiert die Polymerisation und das Aufschäumen des polymerisierenden Materials. Insbesondere bei der Herstellung von PUR-Weichformschaumstoffen erfolgen Polymerisation und Formgebung oft in einem Schritt, typischerweise durch Formgebung oder Sprühen der noch im flüssigen Zustand befindlichen Reaktionsmischung. Die Formschaumstoffe können heiß- oder auch kalthärtend hergestellt werden.

Um nun einen PUR-Weichformschaumstoff bestimmter Zusammensetzung zu erhalten, werden die oben beschriebenen Komponenten vor ihrer Vermischung entsprechend dosiert. Ein Aufschäumen wird dabei normalerweise so erreicht, dass der A-Komponente Wasser zugesetzt wird, welches mit dem Polyisocyanat-Komponente B unter Bildung eines Amins und unter Freisetzung von $CO_2$ reagiert, welches wiederum als Treibgas fungiert. Alternativ oder zusätzlich zu der Verwendung von Wasser werden oft auch flüchtige inerte organische Verbindungen oder inerte Gase verwendet.

Die nach dem erfindungsgemäßen Verfahren hergestellten PUR-Weichschaumstoffe weisen eine Rohdichte gemäß DIN EN ISO 3386-1-98 im Bereich von $\geq$ 63 kg/m$^3$ bis $\leq$ 83 kg/m$^3$ und eine Stauchhärte gemäß DIN EN ISO 3386-1-98 im Bereich von $\geq$ 5,0 kPa bis $\leq$ 9,0 kPa (bei 40% Verformung und 4. Zyklus), sowie einen Hystereseverlust bestimmt in Anlehnung an DIN EN ISO 2439-1-2009 von $\leq$ 16 auf.

Die nach dem erfindungsgemäßen Verfahren hergestellten PUR-Weichschaumstoffe weisen einen Anteil an Ethylenoxid (EO) von $\leq$ 30 Gew.-% bevorzugt $\leq$ 20 Gew.-%, bezogen auf die Summe aller Alkylenoxid- Anteile in den zur Herstellung des PUR-Weichschaumstoffs eingesetzten Polyetherpolyolen,

Vorzugsweise wird das erfindungsgemäße Verfahren zur Herstellung von PUR-Weichformschaumstoffen eingesetzt und die eingesetzten Formhohlkörper geben die Struktur des gewünschten Formschaumkörpers wieder. Die nach dem erfindungsgemäßen Verfahren erhältlichen PUR-Schaumstoffe finden beispielsweise Anwendung für Möbelpolsterungen, Textileinlagen, Matratzen, Automobilsitze, Kopfstützen, Armlehnen, Schwämmen und Bauelementen, sowie Sitz- und Armarturverkleidungen, vorzugsweise für Möbelpolsterungen, Textileinlagen, Matratzen, Automobilsitze und Kopfstützen.

Beispiele

Die Kennzahl (Isocyanat Index) gibt das Verhältnis der tatsächlich eingesetzten IsocyanatMenge zur stöchiometrischen, d.h. berechneten Isocyanat- (NCO)-Menge an:

$$\text{Kennzahl} = [(\text{Isocyanat-Menge eingesetzt}) : (\text{Isocyanat-Menge berechnet})] \bullet 100 \qquad (II)$$

Die Rohdichte wurde bestimmt gemäß DIN EN ISO 845.

Die OH-Zahl wurde bestimmt gemäß DIN 53240.

Die Stauchhärte (CLD 4/40) wurde bestimmt gemäß DIN EN ISO 3386-1-98 bei einer Verformung von 40 %, 4. Zyklus.

Der Hystereseverlust (CLD) wurde bestimmt in Anlehnung an DIN EN ISO 2439-1-2009.

Eingesetzte Rohstoffe:

Polyol A1.1:   Glycerin gestartetes, Ethylenoxid terminiertes Ethylenoxid - Propylenoxid-Polyetherpolyol mit einer OH-Zahl von 27 und einem Ethylenoxid-Gehalt von ca. 16 Gew.-% bezogen auf die Summe von Ethylenoxid und Propylenoxid, hergestellt mittels KOH-katalysierter Addition.

Polyol A1.2:   Glycerin gestartetes, Ethylenoxid terminiertes Ethylenoxid - Propylenoxid-Polyetherpolyol mit einer OH-Zahl von 37 und einem Ethylenoxid-Gehalt von ca. 72 Gew.-% bezogen auf die Summe von Ethylenoxid und Propylenoxid, hergestellt mittels KOH-katalysierter Addition.

Tegostab®B8734LF2 Schaumstabilisator der Firma Evonik Industries AG, DE

Jeffcat® ZR50      Additiv der Firma Huntsman
DABCO NE300      Additiv der Firma Air Products

Um den Einfluss der Isocyanat-Komponente B auf die Qualität des PUR-Schaumstoffs zu untersuchen, wird in den Beispielen B-I und B-2 dieselbe Polyolformulierung Polyol A (Tabelle 1) eingesetzt. In einem weiteren erfindungsgemäßen Beispiel B-III wird Polyol B (Tabelle 1), dem das Polyol B2 aus Prepolymer B-II zugeführt wird, mit dem Isocyanat - Blend B-III zur Reaktion gebracht.

Tabelle 1: Polyolformulierungen für die Herstellung der PUR Schaumstoffe

|  | OH-Zahl | Polyol A Gew.-Teile | Polyol B Gew.-Teile |
|---|---|---|---|
| Polyol A1.1 | 27 | 96,000 | 83,180 |
| Polyol A1.2 | 37 | 4,000 | 3,470 |
| Polyol B2 | 27 |  | 13,350 |
| Wasser (A2) | 6228 | 2,900 | 2,510 |
| Diethanolamin (A3) | 1601 | 0,400 | 0,350 |
| Tegostab ® B8734LF2 (A4) | 83 | 0,300 | 0,260 |
| Jeffcat ® ZR50 (A4) | 221 | 0,600 | 0,520 |
| DABCO NE300 (A4) | 276 | 0,150 | 0,130 |

Isocyanat-Komponente:

Polyol B2:   Sorbitol gestartetes, Ethylenoxid-terminiertes Ethylenoxid-Propylenoxid-Polyetherpolyol mit einer OH-Zahl von 28 mg KOH/g und einem Ethylenoxid-Gehalt von 17 Gew.-% bezogen auf die Summe von Ethylenoxid und Propylenoxid

B1.1   Diphenylmethandiisocyanat (MDI) mit einem NCO-gehalt von 33,6%

B1.2   Monomeres Diphenylmethandiisocyanat (mMDI) mit < 1 Gew.-% 2,2'-MDI, 50±5 Gew.-% 2,4'-MDI und 50 ± 5 Gew.-% 4,4'-MDI sowie einem NCO-Gehalt von 33,6%

B1.3   hoch monomerhaltiges Polymer MDI mit einem NCO-Gehalt von 32,5 und <3,5 Gew.-% 2,2'-MDI, ca. 25 Gew.-% 2,4'-MDI, ca. 60 Gew.-% 4,4'-MDI und ca. 15 Gew.% an Polyphenylpolyisocyanat

B1.4 polymeres MDI mit einem NCO-Gehalt von 31,5 und <1 Ges.-% 2,2'-MDI, ca. 5 Gew.-% 2,4'-MDI, ca. 35 Gew.-% 4,4'-MDI und ca. 60 Gew.-% höherer Homologer

Die Prepolymere wurden entsprechend der in Tabelle 2 angegebene Rezeptur hergestellt, indem das Isocyanatgemisch bei 40 °C in einem 101 Glaskolben vorgelegt und unter Rühren mit der angegebenen Menge des Polyols B2 versetzt wurde, ohne dass die Temperatur von 80°C überschritten wurde. Die Fertigung des Prepolymers wurde nach einer Rührzeit von drei Stunden mit dem Abkühlen auf Raumtemperatur beendet.

**Tabelle 2: Formulierung zur Herstellung der Komponente B (Prepolymere B-I und B-II sowie Isocyanat Blend B-III)**

| Isocyanatkomponente | | B-I (Vergleich) | B-II | B-III |
|---|---|---|---|---|
| Polyol B2 | [Gew.-%] | 23,39 | 23,34 | -- |
| B1.1 | [Gew.-%] | 18,4 | 5,68 | 7,41 |
| B1.2 | [Gew.-%] | 17,27 | 29,46 | 38,43 |
| B1.4 | [Gew.-%] | 23,06 | 23,66 | 30,86 |
| B1.3 | [Gew.-%] | 17,88 | 17,86 | 23,3 |
| **Summe** | | **100** | **100** | **100** |
| NCO-Gehalt | [Gew.-%] | 24,5 | 24,5 | 32,5 |
| Summe mMDI Anteil[1] | [Gew.-%] | 83,06 | 82,75 | 82,75 |
| 2,2'- MDI Anteil | [Gew.-%] | 0,95 | 1,02 | 1,02 |
| 2,4'- MDI Anteil | [Gew.-%] | 20,29 | 29,29 | 29,29 |
| 4,4'- MDI Anteil | [Gew.-%] | 61,82 | 52,45 | 52,45 |
| Verhältnis 4,4': 2,4'-MDI | | 3 | 1,8 | 1,8 |

[1]mMDI: monomeres MDI

Unter den für die Herstellung von Polyurethanweichformschaumstoffen üblichen Verarbeitungsbedingungen wurden die Ausgangskomponenten der Tabelle 1 und 2 über eine Zweikomponenten-Hochdruckdosier- und Mischmaschine in eine auf 60°C beheizte Aluminiumform eingetragen. Nach einer Reaktionszeit von 4 min wurden die ausreagierten Schäume der Form entnommen.

Tabelle 3: Eigenschaften der hergestellten hochelastischen flexiblen Weichschäume mit B-I (Vergleich).

| Isocyanatkomponente B-I (Vergleich) | | | | | |
|---|---|---|---|---|---|
| **Beispiel** | **1 (V)** | **2 (V)** | **3 (V)** | **4 (V)** | **5 (V)** |
| Kennzahl | 105 | 100 | 100 | 100 | 90 |
| Formteildichte [kg/m$^3$] | 75,3 | 80,1 | 75,1 | 65,2 | 75,1 |
| Rohdichte [kg/m$^3$] | 77,9 | 82,6 | 77,6 | 67,3 | 76,8 |
| CLD 4/40 [kPa] | 10,9 | 9,5 | 9,1 | 7,1 | 6,8 |
| Hystereseverlust CLD [%] | 20 | 18 | 19 | 19 | 19 |

Tabelle 4: Eigenschaften der hergestellten hochelastischen flexiblen Weichschäume mit **B-II**

| Isocyanatkomponente B-II | | | | | |
|---|---|---|---|---|---|
| **Beispiel** | **6** | **7** | **8** | **9** | **10** |
| Kennzahl | 105 | 100 | 100 | 100 | 90 |
| Formteildichte [kg/m$^3$] | 75 | 80 | 75 | 65,3 | 75,8 |
| Rohdichte [kg/m$^3$] | 74,9 | 79,9 | 74,6 | 66,1 | 76,6 |
| CLD 4/40 [kPa] | 8,7 | 8,1 | 7,2 | 6,1 | 6,0 |
| Hystereseverlust CLD [%] | 16 | 14 | 14 | 13 | 15 |

Tabelle 5: Eigenschaften der hergestellten hochelastischen flexiblen Weichschäume mit B-III

| Isocyanatkomponente B-III (Blend) | | | |
|---|---|---|---|
| **Beispiel** | **11** | **12** | **13** |
| Kennzahl | 105 | 100 | 90 |
| Formteildichte [kg/m$^3$] | 75 | 75 | 75 |
| Rohdichte [kg/m$^3$] | 74,9 | 75,3 | 76,4 |
| CLD4/40[kPa] | 8,9 | 7,5 | 6,2 |
| Hystereseverlust CLD [%] | 16 | 15 | 14 |

Der Versuch, ein Prepolymer das ein Verhältnis der 4,4'-MDI zu 2,4'- MDI Isomeren von <1,4 aufweist, zu einem Formschaum umzusetzen, führte zu einem sehr weichen, schlecht entfonnbaren Schaum, der sich nicht zur Herstellung von Sitzschaumstoffen eignet.

Die Beispiele 2 (V) bis 4 (V) der Tabelle 3 und Beispiele 7 bis 9 der Tabelle 4 zeigen, dass die Hysterese durch Änderung der Formteildichte bei gegebener Rezeptur geringfügig beeinflusst wird.

Auch die sich durch die Indexreduzierung ergebende Härteabnahme wirkt sich nur in geringem Umfang auf die Hysterese aus (Beispiele 1(V), 3(V), 5(V) und 6, 8, 10).

Die Beispiele der Tabelle 3 erfüllen nicht die aktuellen Anforderungen, PUR-Weichschaumstoffe mit einer Hysterese von $\leq$ 16 herzustellen.

Demgegenüber lässt sich die gewünscht niedrige Hysterese sicher erreichen, wenn die erfindungsgemäßen Präpolymere (Tabelle 4) oder Isocyanat-Blends (Tabelle 5) eingesetzt werden.

**Patentansprüche**

1. Verfahren zur Herstellung von PUR-Weichschaumstoffen mit einer Rohdichte gemäß DIN EN ISO 3386-1-98 im Bereich von $\geq$ 63 kg/m$^3$ bis $\leq$ 83 kg/m$^3$ und einer Hysterese gemäß DIN EN ISO 2439-1-2009 von $\leq$ 16 durch Umsetzung von Komponente A enthaltend

   A1 mindestens ein Polyetherpolyol mit einer Funktionalität von 2 bis 6 einer Hydroxyl-Zahl (OH-Zahl) gemäß DIN 53240 von 9 bis 112 mg KOH/g, einem Anteil an Ethylenoxid von 5 bis 40 Gew.-% (bezogen auf die Summe der verwendeten Alkylenoxide)
   A2 Wasser und/oder physikalische Treibmittel,
   A3 gegebenenfalls gegenüber Isocyanaten reaktionsfähige Wasserstoffatome aufweisende Verbindungen mit einer OH-Zahl von 140 mg KOH/g bis 1800 mg KOH/g,
   A4 Hilfs- und Zusatzstoffen wie

   a) Katalysatoren,
   b) oberflächenaktive Zusatzstoffe und
   c) Pigmente oder Flammschutzmittel

   wobei Komponente A frei von Polyricinolsäureestern ist, mit
   Komponente B, enthaltend
   ein Gemisch an Di- und Polyisocyanaten der Diphenylmethan (MDI)-Reihe (B1),
   gegebenenfalls ein oder mehrere Polyetherpolyole (B2) mit einer Funktionalität
   von 2 bis 8, vorzugsweise von 2 bis 6, einer OH-Zahl gemäß DIN 53240 von $\geq$ 9
   mg KOH/g bis $\leq$ 56 mg KOH/g,
   wobei das Verhältnis von 4,4'-MDI zu 2,4'-MDI zwischen 1,6 und 2,7 liegt,
   und der Gesamt-Monomeren-Gehalt bezogen auf die Summe der eingesetzten Isocyanate 75 bis 85 Gew.-% beträgt,
   wobei die Herstellung des PUR-Weichschaumes bei einer Kennzahl von 75 bis 110 erfolgt.

2. Verfahren gemäß Anspruch 1, wobei Komponente A1 mindestens ein Polyetherpolyol mit einer Funktionalität von 2 bis 6, einer Hydroxyl-Zahl (OH-Zahl) gemäß DIN 53240 von 9 bis 112 mg KOH/g, einem Anteil an Ethylenoxid von 10 bis 20 Gew.-% (bezogen auf die Summe der verwendeten Alkylenoxide) enthält.

3. Verfahren gemäß Anspruch 1 oder 2, wobei Komponente A1 zu 100 Gew.-T eilen; Komponente A2 zu 0,5 bis 5 Gew.-Teilen (bezogen auf 100 Gew.-Teile der Komponente A1); Komponente A3 zu 0 bis 10 Gew.-Teilen (bezogen auf 100 Gew.-Teile der Komponente A1) und Komponente A4 zu 0,05 bis 10 Gew.-Teilen (bezogen auf 100 Gew.-Teile der Komponente A1) eingesetzt werden.

4. Verfahren gemäß einem der Ansprüche 1 bis 3, wobei Komponente A2 Wasser ist.

5. Verfahren gemäß einem der Ansprüche 1 bis 4, wobei Komponente A2 in einer Menge von 2,0 bis 3,2 Gew.-Teilen (bezogen auf 100 Crew.-Teile A1) eingesetzt wird.

6. Verfahren gemäß einem der Ansprüche 1 bis 5, wobei Komponente A1

   A1.1 mindestens ein Polyetherpolyol mit einer Funktionalität von 2 bis 6, einem EO-Gehalt von 5 bis 40 Gew.-% einer OH-Zahl gemäß DIN 53240 von $\geq$9 mg KOH/g bis $\leq$ 112 mg KOH/g,
   A1.2 gegebenenfalls mindestens ein Polyetherpolyol mit einer Funktionalität von 2 bis 6, einem EO-Gehalt von > 60 Gew.-%, einer OH-Zahl gemäß DIN 53240 von $\geq$9 mg KOH/g bis $\leq$ 112 mg KOH/g,
   A1.3 gegebenenfalls mindestens eine Dispersion eines Polymers in einem Polyetherpolyol, wobei die OH-Zahl gemäß DIN 53240 der Dispersion in einem Bereich von 9 bis 60 mg KOH/g liegt und wobei das Polyetherpolyol eine Hydroxyl-Funktionalität von 2 bis 6, einen PO-Gehalt in einer Menge von 70 bis 90 Gew.-% und einen EO-Gehalt in einer Menge von 10 bis 30 Gew.-% aufweist,

   enthält.

7. Verfahren gemäß einem der Ansprüche 1 bis 6, wobei Komponente B ein Isocyanat-terminiertes urethangruppenhaltiges Prepolymer erhältlich durch Reaktion von einem Gemisch enthaltend Di- und Polyisocyanate der Diphenylmethan (MDI)-Reihe (B1), wobei dieses Gemisch ein Verhältnis der 4,4'-MDI- zu 2,4'-MDI-Isomeren zwischen 1,6 und 2,7 aufweist, und der Gesamt-Monomeren-Gehalt bezogen auf die Summe der eingesetzten Isocyanate im Bereich von 75 bis 85 Gew.-% liegt mit einem oder mehreren Polyetherpolyolen (B2) mit einer Funktionalität von 2 bis 8, einer OH-Zahl gemäß DIN 53240 von $\geq$ 9 mg KOH/g bis $\leq$ 56 mg KOH/g.

8. Verfahren gemäß Anspruch 7, wobei das urethangruppenhaltige Prepolymer einen NCO-Gehalt von 22 bis 32,5 Gew.-%, aufweist.

9. Verfahren gemäß einem der Ansprüche 1 bis 8, wobei Komponente B ausgewählt ist aus der Gruppe bestehend aus Di- und Polyisocyanaten aus der MDI-Reihe (B1) und gegebenenfalls ein oder mehrere Polyetherpolyole (B2).

10. Verfahren gemäß einem der Ansprüche 1 bis 9, wobei die PUR-Weichschaumstoffe als Formschaumstoffe im Kaltschaumverfahren hergestellt werden.

11. Polyurethan-Weichformschaumstoffe mit einer Rohdichte gemäß DIN EN ISO 3386-1 98 im Bereich von > 63 kg/m<3>bis < 83 kg/m <3>und einer Hysterese gemäß DIN EN ISO 2439-1 -2009 von < 16 erhältlich nach dem Verfahren gemäß einem der Ansprüche 1 bis 10.

12. Polyurethan-Weichformschaumstoffe gemäß Anspruch 11, wobei die PUR-Weichformschaumstoffe einen Anteil an Ethylenoxid (EO) von $\leq$ 30 Gew.-%, bezogen auf die Summe aller Alkylenoxid- Anteile in den zur Herstellung des PUR-Weichschaumstoffs eingesetzten Polyetherpolyolen aufweisen.

13. Verwendung der Polyurethan-Weichformteile gemäß Anspruch 11 zur Herstellung von Möbelpolsterungen, Textileinlagen, Matratzen, Automobilsitze, Kopfstützen, Armlehnen, Schwimmen und Bauelementen, sowie Sitz- und Armarturverkleidungen.

**Claims**

1. Process for producing flexible PUR foams having a DIN EN ISO 3386-1-98 apparent density in the range of $\geq$ 63 kg/m$^3$ toy 83 kg/m$^3$ and a DIN EN ISO 2439-1-2009 hysteresis of $\leq$ 16 by reaction of component A containing

   A1 at least one polyether polyol having a functionality of 2 to 6, a DIN 53240 hydroxyl number (OH number) of 9 to 112 mg KOH/g, an ethylene oxide fraction of 5 to 40 wt% (based on the sum total of alkylene oxides used),
A2 water and/or physical blowing agents,
A3 optionally isocyanate-reactive hydrogen compounds having an OH number of 140 mg KOH/g to 1800 mg KOH/g,
A4 auxiliary and added-substance materials such as

    a) catalysts,
    b) surface-active added-substance materials, and
    c) pigments or flame retardants,

wherein component A is free of polyricinoleic esters,
with
component B containing

a mixture of di- and polyisocyanates of the diphenylmethane (MDI) series (B1),
optionally one or more polyether polyols (B2) having a functionality of 2 to 8, preferably of 2 to 6, a DIN 53240 OH number of $\geq 9$ mg KOH/g to $\leq 56$ mg KOH/g,
wherein the ratio of 4,4'-MDI to 2,4'-MDI is between 1.6 and 2.7
and total monomer content is 75 to 85 wt%, based on the sum total of isocyanates used,

wherein the flexible PUR foam is produced at an isocyanate index of 75 to 110.

2. Process according to Claim 1 wherein component A1 contains at least one polyether polyol having a functionality of 2 to 6, a DIN 53240 hydroxyl number (OH number) of 9 to 112 mg KOH/g, an ethylene oxide fraction of 10 to 20 wt% (based on the sum total of alkylene oxides used).

3. Process according to Claim 1 or 2 utilizing component A1 at 100 parts by weight; component A2 at 0.5 to 5 parts by weight (based on 100 parts by weight of component A1); component A3 at 0 to 10 parts by weight (based on 100 parts by weight of component A1) and component A4 at 0.05 to 10 parts by weight (based on 100 parts by weight of component A1).

4. Process according to any of Claims 1 to 3 wherein component A2 is water.

5. Process according to any of Claims 1 to 4 wherein component A2 is used in an amount of 2.0 to 3.2 parts by weight (based on 100 parts by weight of A1).

6. Process according to any of Claims 1 to 5 wherein component A1 contains

A1.1 at least one polyether polyol having a functionality of 2 to 6, an EO content of 5 to 40 wt%, a DIN 53240 OH number of $\geq 9$ mg KOH/g to $\leq 112$ mg KOH/g,
A1.2 optionally at least one polyether polyol having a functionality of 2 to 6, an EO content of > 60 wt%, a DIN 53240 OH number of $\geq 9$ mg KOH/g to $\leq 112$ mg KOH/g,
A1.3 optionally at least one dispersion of a polymer in a polyether polyol, wherein the DIN 53240 OH number of the dispersion is in the range from 9 to 60 mg KOH/g and wherein the polyether polyol has a hydroxyl functionality of 2 to 6, a PO content in an amount of 70 to 90 wt% and an EO content in an amount of 10 to 30 wt%.

7. Process according to any of Claims 1 to 6 wherein component B an isocyanate-terminated urethane prepolymer obtainable by reacting a mixture containing di- and polyisocyanates of the diphenylmethane (MDI) series (B1), wherein this mixture has a 4,4'-MDI to 2,4'-MDI isomer ratio between 1.6 and 2.7 and total monomer content is in the range from 75 to 85 wt%, based on the sum total of isocyanates used, with one or more polyether polyols (B2) having a functionality of 2 to 8, a DIN 53240 OH number of $\geq 9$ mg KOH/g to $\leq 56$ mg KOH/g.

8. Process according to Claim 7 wherein the urethane prepolymer has an NCO content of 22 to 32.5 wt%.

9. Process according to any of Claims 1 to 8 wherein component B is selected from the group consisting of di- and polyisocyanates from the MDI series (B1) and optionally one or more polyether polyols (B2).

10. Process according to any of Claims 1 to 9 wherein the flexible PUR foams are produced as molded foams in the cold-cure process.

**11.** Flexible polyurethane foam having a DIN EN ISO 3386-1-98 apparent density in the range of >63 kg/m$^3$ to <83 kg/m$^3$ and a DIN EN ISO 2439-1-2009 hysteresis of <16 obtainable by the process according to any of claims 1 to 10.

**12.** Flexible polyurethane foam according to Claim 11 wherein the flexible PUR foam has an ethylene oxide (EO) fraction of 30 wt%, based on the sum total of all alkylene oxide fractions in the polyether polyols used for producing the flexible PUR foam.

**13.** Use of flexible polyurethane moldings according to Claim 11 in the manufacture of furniture cushioning, textile inserts, mattresses, automotive seats, headrests, arm rests, sponges and component elements, and also seat and dashboard trim.

**Revendications**

**1.** Procédé pour la préparation de mousses souples de PUR présentant une densité brute, selon la norme DIN EN ISO 3386-1-98, dans la plage de $\geq$ 63 kg/m$^3$ à $\leq$ 83 kg/m$^3$ et un hystérésis, selon la norme DIN EN ISO 2439-1-2009, $\leq$ 16 par transformation d'un composant A contenant

A1 au moins un polyétherpolyoi présentant une fonctionnalité de 2 à 6, un indice d'hydroxyle (indice OH) selon la norme DIN 53240 de 9 à 112 mg de KOH/g, une proportion d'oxyde d'éthylène de 5 à 40% en poids (par rapport à la somme des oxydes d'alkylène utilisés)
A2 de l'eau et/ou un agent gonflant physique,
A3 le cas échéant des composés présentant des atomes d'hydrogène réactifs par rapport aux isocyanates présentant un indice OH de 140 mg de KOH/g à 1800 mg de KOH/g,
A4 des adjuvants et des additifs tels que

a) des catalyseurs,
b) des additifs tensioactifs et
c) des pigments ou des agents ignifuges

le composant A étant exempt d'esters de l'acide polyricinoléique, avec un composant B, contenant

un mélange de diisocyanates et de polyisocyanates de la série des diphénylméthanes (MDI) (B1), le cas échéant un ou plusieurs polyétherpolyols (B2) présentant une fonctionnalité de 2 à 8, de préférence de 2 à 6, un indice OH selon la norme DIN 53240 $\geq$ 9 mg de KOH/g à $\leq$ 56 mg de KOH/g,
le rapport de 4,4'-MDI à 2,4'-MDI étant situé entre 1,6 et 2,7 et la teneur totale en monomères, par rapport à la somme des isocyanates utilisés, étant de 75 à 85% en poids,

la production de la mousse souple de PUR ayant lieu à un indice (isocyanate) de 75 à 110.

**2.** Procédé selon la revendication 1, le composant A1 contenant au moins un polyétherpolyol présentant une fonctionnalité de 2 à 6, un indice d'hydroxyle (indice OH) selon la norme DIN 53240 de 9 à 112 mg de KOH/g, une proportion d'oxyde d'éthylène de 10 à 20% en poids (par rapport à la somme des oxydes d'alkylène utilisés).

**3.** Procédé selon la revendication 1 ou 2, le composant A1 étant utilisé à raison de 100 parties en poids ; le composant A2 à raison de 0,5 à 5 parties en poids (par rapport à 100 parties en poids du composant A1) ; le composant A3 à raison de 0 à 10 parties en poids (par rapport à 100 parties en poids du composant A1) et le composant A4 à raison de 0,05 à 10 parties en poids (par rapport à 100 parties en poids du composant A1).

**4.** Procédé selon l'une quelconque des revendications 1 à 3, le composant A2 étant de l'eau.

**5.** Procédé selon l'une quelconque des revendications 1 à 4, le composant A2 étant utilisé en une quantité de 2,0 à 3,2 parties en poids (par rapport à 100 parties en poids de A1).

**6.** Procédé selon l'une quelconque des revendications 1 à 5, le composant A1 contenant

A1.1 au moins un polyétherpolyol présentant une fonctionnalité de 2 à 6, une teneur en OE de 5 à 40% en poids, un indice OH selon la norme DIN 53240 de $\geq$ 9 mg de KOH/g à $\leq$ 112 mg de KOH/g,

A1.2 le cas échéant au moins un polyétherpolyol présentant une fonctionnalité de 2 à 6, une teneur en OE > 60% en poids, un indice OH selon la norme DIN 53240 des 9 mg de KOH/g à $\leq$ 112 mg de KOH/g,

A1.3 le cas échéant au moins une dispersion d'un polymère dans un polyétherpolyol, l'indice OH selon la norme DIN 53240 de la dispersion se situant dans une plage de 9 à 60 mg de KOH/g et le polyétherpolyol présentant une fonctionnalité d'hydroxyle de 2 à 6, une teneur en OP en une quantité de 70 à 90% en poids et une teneur en OE en une quantité de 10 à 30% en poids.

7. Procédé selon l'une quelconque des revendications 1 à 6, le composant B un prépolymère contenant des groupes uréthane, terminé par isocyanate, pouvant être obtenu par réaction d'un mélange contenant des diisocyanates et des polyisocyanates de la série du diphénylméthane (MDI) (B1), ce mélange présentant un rapport d'isomères 4,4'-MDI aux isomères 2,4'-MDI entre 1,6 et 2,7, et la teneur totale en monomères, par rapport à la somme des isocyanates utilisés se situant dans la plage de 75 à 85% en poids, avec un ou plusieurs polyétherpolyols (B2) présentant une fonctionnalité de 2 à 8, un indice OH selon la norme DIN 53240 de $\geq$ 9 mg de KOH/g à $\leq$ 56 mg de KOH/g.

8. Procédé selon la revendication 7, le prépolymère contenant des groupes uréthane présentant une teneur en NCO de 22 à 32,5% en poids.

9. Procédé selon l'une quelconque des revendications 1 à 8, le composant B étant choisi dans le groupe constitué par les diisocyanates et les polyisocyanates de la série MDI (B1) et le cas échéant un ou plusieurs polyétherpolyols (B2).

10. Procédé selon l'une quelconque des revendications 1 à 9, les mousses souples de PUR étant produites sous forme de mousses façonnées dans un procédé de moussage à froid.

11. Mousses façonnées souples de polyuréthane présentant une densité brute selon la norme DIN EN ISO 3386-1-98 dans la plage de > 63 kg/m$^3$ à < 83 kg/m$^3$ et un hystérésis selon la norme DIN EN ISO 2439-1-2009 < 16, pouvant être obtenues selon le procédé selon l'une quelconque des revendications 1 à 10.

12. Mousses façonnées souples de polyuréthane selon la revendication 11, les mousses façonnées souples de PUR présentant une proportion d'oxyde d'éthylène (OE) $\leq$ 30% en poids, par rapport à la somme de toutes les proportions d'oxyde d'alkylène dans les polyétherpolyols utilisés pour la production de la mousse souple de PUR.

13. Utilisation des pièces façonnées souples en polyuréthane selon la revendication 11 pour la fabrication de rembourrages de meubles, d'inserts textiles, de matelas, de sièges de voitures, d'appuie-tête, d'accoudoirs, d'éponges et d'éléments de construction ainsi que d'habillages de sièges et d'armatures.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0547765 A
- WO 01032735 A
- WO 2004014976 A
- US 20030158280 A
- WO 02068493 A
- EP 1213310 A
- EP 0555721 A
- WO 2012069384 A
- DE 10211975 A
- US 20110269863 A

- EP 2046861 A
- US 4089835 A
- US 4260530 A
- GB 2072204 A
- DE 3103757 A1
- US 4374209 A
- EP 0007502 A
- EP 0000389 A
- EP 0176013 A
- EP 355000 A

**In der Beschreibung aufgeführte Nicht-Patentliteratur**

- **G. OERTEL.** Kunststoff-Handbuch. Carl-Hanser-Verlag, München, 1993, vol. VII, 104-127
- **W. SIEFKEN.** *Justus Liebigs Annalen der Chemie,* vol. 562, 75-136

- **FRAGE KOMMEN.** Kunststoff-Handbuch. Carl-Hanser-Verlag, 1993, vol. VII, 139-265